(19) Europäisches Patentamt
European Patent Office
Office européen des brevets

(11) EP 0 984 032 B1

(12) **EUROPEAN PATENT SPECIFICATION**

(45) Date of publication and mention of the grant of the patent:
**22.10.2003 Bulletin 2003/43**

(21) Application number: **98904380.7**

(22) Date of filing: **19.02.1998**

(51) Int Cl.[7]: **C08J 9/08**, C08J 9/00

(86) International application number:
**PCT/JP98/00680**

(87) International publication number:
**WO 98/037132 (27.08.1998 Gazette 1998/34)**

(54) **FOAM CROSS-LINKED WITH METAL SALT AND PROCESS FOR PRODUCTION**

MIT METALLSALZ VERNETZTER SCHAUMSTOFF UND HERSTELLUNGSVERFAHREN DAFÜR

MOUSSE RETICULEE A L'AIDE DE SEL METALLIQUE ET SON PROCEDE DE PRODUCTION

(84) Designated Contracting States:
**DE**

(30) Priority: **19.02.1997 JP 5244797**

(43) Date of publication of application:
**08.03.2000 Bulletin 2000/10**

(73) Proprietor: **SANYO CHEMICAL INDUSTRIES, LTD.**
**Kyoto-shi, Kyoto 605-0995 (JP)**

(72) Inventors:
- **TOMOSADA, Tsuyoshi, Sanyo Chemical Ind., Ltd. Kyoto-shi, Kyoto 605-0995 (JP)**
- **NODA, Kimihiko, Sanyo Chemical Ind., Ltd. Kyoto-shi, Kyoto 605-0995 (JP)**
- **SASAKI, Satoshi, Sanyo Chemical Ind., Ltd. Kyoto-shi, Kyoto 605-0995 (JP)**
- **NISHIGUCHI, Hideo, Sanyo Chemical Ind., Ltd. Kyoto-shi, Kyoto 605-0995 (JP)**
- **NISHIDA, Hideyuki, Sanyo Chemical Ind., Ltd. Kyoto-shi, Kyoto 605-0995 (JP)**

(74) Representative: **Brehm, Hans-Peter et al**
**Patent- und Rechtsanwälte**
**Hansmann & Vogeser**
**Albert-Rosshaupter-Strasse 65**
**81369 München (DE)**

(56) References cited:
**DE-A- 19 654 158** **JP-B2- 2 011 621**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

EP 0 984 032 B1

## Description

The present invention relates to a novel foam which is useful for several applications such as a heat insulating material, a structural material, a protective material and a sound insulating material.

Generally, foams such as polyurethane foams, polyurea foams, polystyrene foams, polyolefin foams and polycyclopentadiene foams are known in the art. Japanese Kokoku Publication Hei-2-11621 discloses an ion-crosslinked polyethylene foam which may be obtained by reacting an ethylene-carboxylic acid copolymer with a metal carbonate.

Accordingly a copolymer containing an α-olefin and 0.5 to 25 mol-% monomer containing a carboxylic acid (anhydride) group and a metal carbonate are plasticized at a temperature of 130 to 290°C, and under a pressure of at least 5 kg/cm$^2$ to (partially) couple the carboxylic acid (anhydride) group in the copolymer with the metal ion. The mixture is extruded into a lower pressure zone to obtain a foam by the action of co-produced $CO_2$.

The copolymer is preferably prepared by

(I) copolymerizing an α-olefin (e.g. ethylene, propylene, butene-1, pentene-1, hexene-1, 3-methyl-butene-1, 4-methyl-butene-1 or styrene) with an α,β-unsaturated carboxylic acid (anhydride) (e.g. acrylic, methacrylic, crotonic, itaconic, maleic or fumaric acid, mono-fumarate or maleic anhydride) and optionally with vinyl acetate, methyl methacrylate, vinyl chloride or acrylonitrile at 150 to 300°C and under a pressure of 30 to 3000 kg/cm$^2$ in the presence of a polymerization catalyst; or

(II) by graft copolymerizing a polymer of an α-olefin with an α,β-unsaturated carboxylic acid; or

(III) by hydrolyzing a copolymer comprising a copolymer containing an α-olefin and a carboxylic acid forming monomer.

The metal carbonate is typically $Na_2CO_3$, $NaHCO_3$, $K_2CO_3$, $KHCO_3$, $CaCO_3$, $MgCO_3$, $ZnCO_3$ or $PbCO_3$. This known process provides ionic cross-linking and foaming in one step.

However, the conventional foams not only involves the use of starting materials with high ecological loads but cannot avoid generation of noxious gases and soot owing to incomplete combustion in incineration, destruction of the incinerator through generation of the excess heat of combustion, and generation of static electricity, all of which cause a problem that a burden on the environment is high.

The ion-crosslinked polyethylene foam disclosed in Japanese Kokoku Publication Hei-2-11621 has an expansion ratio of as much as about 2 to 5 and, therefore, the low-density series cannot be provided. Moreover, if an attempt is made to increase the expansion ratio of the carboxylic acid-containing copolymer by combining other blowing agent, the foam strength is so short that cells are destroyed and low-density foams cannot be provided. In addition, because the foam density cannot be lowered, the temperature-time area and the emitting smoke factor are remarkably high so that criteria of the flame retardance test (JIS A-1321) for Grade 1 to Grade 3 cannot be satisfied.

The document DE 196 54 158 A1 published on June 26, 1997 is related to a foam comprising metal salt-crosslinked cellular homopolymer or copolymer (A) obtained by polymerizing a monomer charge comprising an α,β-unsaturated carboxylic acid and optionally one or more other vinyl monomers, wherein at least part of said monomer charge is concurrently foamed and polymerized in the presence of a metal salt of carboxylic acid.

Said document discloses several embodiments of a process for preparing said foam. According to a first embodiment, a monomer charge comprising an α,β-unsaturated carboxlic acid and optionally one or more other vinyl monomers is caused to undergo concurrent foaming and crosslinking-polymerization in the presence of a metal salt of carboxylic acid and a polymerization initiator, where necessary, under heating. According to a second embodiment a homopolymer or copolymer (B) may be obtained by polymerizing an α,β-unsaturated carboxylic acid and optionally one or more other vinyl monomers; and a monomer charge containing an α,β-unsaturated carboxylic acid and/or one or more other vinyl monomers are caused to undergo concurrent foaming and crosslinking-polymerization in the presence of a metal salt of carboxylic acid and a polymerization initiator, where necessary, under heating.

The α,β-unsaturated carboxylic acid in the context of this document includes but is not limited to acrylic acid, methacrylic acid, itaconic acid, maleic acid, fumaric acid, and cinnamic acid, inclusive of salts thereof. The salts may be salts with alkali metals (e.g. sodium, potassium, rubidium, etc.), alkaline earth metals (e.g. magnesium, calcium, barium, etc.), typical metals (e.g. aluminium, germanium, tin, etc.), and transition metals (e.g. iron, cobalt, nickel, copper, zinc, etc.).

The other vinyl monomer includes a variety of known monomers, for example water-soluble monovinyl monomers such as (meth)acrylamide, vinylpyrrolidone, hydroxyethyl (meth)acrylate, addition product of (meth)acrylic acid with alkylene oxides, [(meth)acryloyl polyoxymethylenemethyl ether], 2-(meth)acryloylamino-2-methyl-propanesulfonic acid and its salt, vinylsulfonic acid and its salt, styrenesulfonic acid and its salt, itaconic acid and its salt, maleic acid and its salt, etc. and oil-soluble monovinyl monomers such as styrene, α-methylstyrene, methyl (meth)acrylate, acrylonitrile, vinyl acetate, and the like.

Starting from this prior art, it is the object of the present invention to provide other useful foams based on the

concept of metal salt-crosslinking and polymerizing unsaturated monomers containing a metal salt-crosslinkable functional group. Further, some methods for preparing said other useful foams shall be stated.

SOLUTION OF SAID OBJECT ACCORDING TO THE PRESENT INVENTION

In order to solve the fore-mentioned object (or technical problem, respectively), the present invention provides a foam comprising an organic polymer expanded matrix (I) and at least one kind of inorganic substance (II) selected from the group consisting of metals, metal compounds and non-metal inorganic fillers, wherein

said expanded matrix (I) contains metal salt-crosslinks and

said organic polymer is at least one polymer selected from the group consisting of a radical-polymerization polymer containing metal salt-crosslinkable functional groups, a polyaddition polymer containing metal salt-crosslinkable functional groups and an addition-condensation polymer containing metal salt-crosslinkable functional groups;

in which the radical-polymerization polymer containing metal salt-crosslinkable functional groups contains as a constituent monomer an unsaturated monomer containing a metal salt-crosslinkable functional group and optionally other unsaturated monomers (a4), and

the unsaturated monomer containing a metal salt-crosslinkable functional group is selected from the group consisting of a sulfonic acid group-containing unsaturated monomer (a2) and a phosphate group-containing unsaturated monomer (a3), and the relation between the weight percentage (M) of the metal forming said metal salt-crosslinks in the expanded matrix (I) based on the total weight of the expanded matrix (I) and the inorganic substance (II) and the weight percentage (S) of the inorganic substance (II) satisfies the following expression.

$$M \geq 10 - S/4 \qquad (1)$$

wherein $M \leq 50$ and $S \geq 5$.

According to a further aspect, the present invention provides several embodiments of a process for producing a metal-salt crosslinked foam of the fore-mentioned type.

According to a first embodiment, a process for producing a metal salt-crosslinked foam of said type is provided comprising the steps of subjecting an organic polymer containing a metal salt-crosslinkable functional group to crosslinking with a metal or metal compound and expansion in the presence of an inorganic substance (II).

According to a second embodiment, a process for producing a metal salt-crosslinked foam of said type is provided comprising the steps of subjecting a metal salt-crosslinkable functional group-containing monomer to concurrent polymerization, crosslinking with a metal or metal compound and expansion in the presence of an inorganic substance (II).

According to a further modification of said processes, a blowing agent may be additionally present.

According to a third embodiment, a process for producing a metal salt-crosslinked foam of said type is provided comprising the steps of subjecting a metal salt-crosslinked monomer to concurrent polymerization and expansion in the presence of an inorganic substance (II) and a blowing agent.

Further aspects and advantageous embodiments of the present invention may be taken from the dependent claims.

The foam of the present invention comprises an organic polymer expanded matrix (I) and an inorganic substance (II). The expanded matrix (I) mentioned above contains metal salt-crosslinks. The term "metal salt-crosslinks" as used in this specification means chemical bonds formed between functional groups of an organic polymer through the intermediary of a metal. The mode of chemical bond involved may for example be ionic bond or coordination bond.

In the foam of the present invention, the relation between the weight percentage (M) of the metal forming said metal salt-crosslinks in the expanded matrix (I) and the weight percentage (S) of the inorganic substance (II) which are based on the total weight of the expanded matrix (I) and the inorganic substance (II) should satisfy the following expression (1),

$$M \geqq 10 - S/4 \qquad (1)$$

wherein $M \leqq 50$, $S \geqq 5$.

In case the above expression (1) is not satisfied, the flame retardance of the foam is insufficient. Therefore, the above relation should be complied with.

More preferably, the following expression (2) should be satisfied.

$$M \geqq 12 - S/4 \quad (2)$$

Referring to the above expressions (1) and (2), if M is greater than 50, the quantity of the metal forming said metal salt-crosslinks in the expanded matrix (I) will be so large that the foam will become brittle. If S is less than 5, the amount of the inorganic substance (II) will be so small that the flame retardance will be impaired.
The weight percentage (M) of the metal forming said metal salt-crosslinks and the weight percentage (S) of the inorganic substance (II) in the foam of the present invention can be determined by the X-ray diffraction analysis described hereinafter.
The above mentioned expanded matrix (I) and inorganic substance (II) are now explained in that order.

Expanded matrix (I)

In the present invention, the expanded matrix (I) has metal-salt crosslinks. The metal in the metal-salt crosslinks may be anyone derived from various metals and metal compounds.
The metal or metal compound mentioned above is not particularly restricted but may include polyvalent metals, for example alkaline earth metals such as magnesium, calcium, barium, etc.; Group IIIa and Group IVa metals such as aluminum, germanium, tin, etc.; transition metals such as iron, cobalt, nickel, copper, zinc, etc.; and various salts, oxides and hydroxides of those metals.
The metal salt mentioned above is not particularly restricted but includes the carbonates, sulfates, acetates, borates, phosphates, nitrates and other salts of metals.
Preferred, among them, is the salt, oxide or hydroxide of at least one polyvalent metal selected from the group including calcium, magnesium, zinc, barium, aluminum and iron.
The expanded matrix (I) mentioned above is obtained by an expansion caused by a substance having a blowing action. The substance having a blowing action may be the metal compound used for the formation of said metal salt-crosslinks provided that it has a blowing action. It is also possible to use a blowing agent.
As the blowing agent, there can be used, for example, at least one member selected from the group including metal carbonates and metal hydrogencarbonates. The metals of said metal carbonates or metal hydrogencarbonates may be monovalent metals such as alkali metals (e.g. sodium, potassium, rubidium) and polyvalent metals such as the above-mentioned alkaline earth metals, Group IIIa and Group IVa metals, and transition metals. Among them, polyvalent metals are preferred. In this case, the metal salt not only acts as a blowing agent but forms metal salt-crosslinks with metal salt-crosslinkable functional groups of the unsaturated monomer. More preferably, the polyvalent metal is at least one member selected from the group including calcium, magnesium, barium, zinc, aluminum and iron.
As the blowing agent mentioned above, not only metal carbonates and metal hydrogencarbonates but also the known blowing agents can be employed. For example, azide compounds such as sodium azide; azo compounds such as AIBN, azobiscyanovaleric acid, azodicarbonamide, and azobisamidinopropane salt; carbonates or hydrogencarbonates of monovalent bases, such as ammonium carbonate; gases such as chlorofluorocarbon gases and butane gas; low-boiling solvents; and water can be mentioned.
The above-mentioned expanded matrix (I) comprises an organic polymer. The organic polymer mentioned just above can be at least one polymer selected from the group consisting of ① radical-polymerization polymers containing metal salt-crosslinkable functional groups (PA), ② polyaddition polymers containing metal salt-crosslinkable functional groups (PB) and ③ addition-condensation polymers containing metal salt-crosslinkable functional groups (PC), wherein

- the radical-polymerization polymer containing metal salt-crosslinkable functional groups (PA) contains as a constituent monomer an unsaturated monomer containing a metal salt-crosslinkable functional group and optionally other unsaturated monomers (a4); and
- the unsaturated monomer containing a metal salt-crosslinkable functional group is selected from the group consisting of a sulfonic acid group-containing unsaturated monomer (a2) and a phosphate group-containing unsaturated monomer (a3). As the metal-salt crosslinkable functional group in the case of PB and PC, carboxyl group, sulfonic acid group and phosphate group may be mentioned.

When considering the flame retardant performance and physical properties of the foam, the metal salt-crosslinkable functional group content of said organic polymer should generally amount 30 to 625 milliequivalents/g, and preferably 60 to 625 milliequivalents/g.
The polymers ①, ② and ③ are now described in detail in the order mentioned.

① Radical-polymerization polymers containing metal salt-crosslinkable functional groups (PA)

The constituent monomer of the above mentioned radical-polymerization polymer containing metal salt-crosslinkable functional groups (PA) includes various unsaturated monomers containing a metal salt-crosslinkable functional group and selected from a group including exclusively, a sulfonic acid group-containing unsaturated monomers (a2) and a phosphate group-containing unsaturated monomers (a3).

In addition and where necessary, other unsaturated monomers (a4) may be present when polymerizing the organic polymer.

The sulfonic acid group-containing unsaturated monomers (a2) mentioned above are not particularly restricted but may include vinylsulfonic acid, (meth)allylsulfonic acid, methyl vinylsulfonate, styrenesulfonic acid, α-methylstyrenesulfonic acid, sulfopropyl (meth)acrylate, 2-hydroxy-3-(meth) acryloxypropylsulfonic acid, 2-(meth)acryloylamino-2,2-dimethylethanesulfonic acid, 3-(meth)acryloyloxyethanesulfonic acid, 3-(meth)acryloyloxy-2-hydroxypropanesulfonic acid, 2-(meth)acrylamido-2-methylpropanesulfonic acid, 3-(meth)acrylamido-2-hydroxypropanesulfonic acid, $C_{3-18}$-alkyl-allylsulfosuccinic acid, sulfate of poly(n= 2 to 30)oxyalkylene (ethylene, propylene, butylene; each of which may be a homopolymer, a random polymer or a block polymer)mono(meth)acrylate [for example, sulfate of poly(n= 5 to 15) oxypropylene monomethacrylate], and polyoxyethylene polycyclic phenyl ether sulfate.

The phosphate group-containing unsaturated monomers (a3) mentioned above are not particularly restricted but may include phosphate monoesters of hydroxyalkyl(meth)acrylate, for example, 2-hydroxyethyl (meth)acryloylphosphate, or phenyl-2-acryloyloxylethyl phosphate.

The other unsaturated monomers (a4) as mentioned above are not particularly restricted but may include aliphatic vinyl-containing hydrocarbons such as ethylene, propylene, butene, isobutylene, pentene, heptene, diisobutylene, octene, dodecene, octadecene, butadiene and isoprene; alicyclic vinyl-containing hydrocarbons such as cyclohexene, (di)cyclopentadiene, pinene, limonene, indene and vinylcyclohexene; aromatic vinyl-containing hydrocarbons such as styrene, α-methylstyrene, vinyltoluene, 2,4-dimethylstyrene, ethylstyrene and isopropylstyrene; hydroxyl group-containing unsaturated monomers such as hydroxystyrene, N-methylol (meth) acrylamide, hydroxyethyl (meth) acrylate, hydroxypropyl (meth)acrylate, polyethylene glycol mono(meth)acrylate, (meth)allyl alcohol, crotyl alcohol and isocrotyl alcohol; nitrogen-containing unsaturated monomers such as dimethylaminoethyl (meth)acrylate, diethylaminoethyl (meth)acrylate, t-butylaminoethyl methacrylate, N-aminoethyl(meth)acrylamide, (meth)allylamine, morpholinoethyl (meth)acrylate, 4-vinylpyridine, 2-vinylpyridine, crotylamine, N,N-dimethylaminostyrene, vinylimidazole, N-vinylpyrrole, (meth)acrylamide, N-methyl(meth)acrylamide, N-butylacrylamide, diacetoneacrylamide, N-methylol(meth) acrylamide, N,N'-methylene-bis(meth)acrylamide, cinnamamide, (meth)acrylonitrile and cyanostyrene; epoxy group-containing unsaturated monomers such as glycidyl (meth)acrylate, tetrahydrofurfuryl (meth)acrylate and p-vinylphenylphenyl oxide; halogen-containing unsaturated monomers such as vinyl chloride, vinyl bromide, vinylidene chloride, allyl chloride, dichlorostyrene and chloroprene; alkyl (meth)acrylates such as methyl (meth)acrylate, ethyl (meth)acrylate, propyl (meth)acrylate, butyl (meth)acrylate, 2-ethylhexyl (meth)acrylate and dodecyl (meth)acrylate, (wherein said alkyl group contains 1 to 20 carbon atoms); polyalkylene glycol chain-containing unsaturated monomers such as [polyethylene glycol (mol. wt. 300) mono(meth)acrylate], [polypropylene glycol(mol. wt. 500) monoacrylate], [methyl alcohol-ethylene oxide (10 mole) adduct (meth)acrylate], [lauryl alcohol-ethylene oxide (30 mole) adduct acrylate]; and vinyl esters such as vinyl formate, vinyl acetate, vinyl butyrate, vinyl propionate and vinyl butyrate.

The other unsaturated monomer (a4) may be partially replaced with polyfunctional unsaturated monomers. The polyfunctional unsaturated monomers are not particularly restricted but may include divinylbenzene, [(poly)ethylene glycol di(meth)acrylate], [(poly)propylene glycol di (meth) acrylate], [trimethylolpropane di- or tri(meth)acrylate], [glycerin di- or tri (meth) acrylate], [pentaerythritol di-, tri- or tetra(meth)acrylate], diallyl phthalate, and [(poly)ethylene glycol diallyl ether].

However, it has to be recognised that these monofunctional and polyfunctional unsaturated monomers (a4) as stated above do not contain a metal salt-crosslinkable functional group. This is also and especially true for those unsaturated monomers (a4) consisting of or containing a monomeric or polymeric (methracrylat component).

The metal salt-crosslinkable functional group-containing unsaturated monomer content of said radical-polymerization polymer containing metal salt-crosslinkable functional groups (PA) should be generally not less than 30 weight %, preferably not less than 50 weight %, from the standpoint of foam quality and cost.

When said other unsaturated monomer (a4) is used, its content should be generally not greater than 70 weight %, preferably not greater than 50 weight %, more preferably not greater than 40 weight %. When said polyfunctional unsaturated monomer is used as some other unsaturated monomer (a4) mentioned above, the content of polyfunctional unsaturated monomer should be preferably not greater than 80 weight % of the complete amounf of unsaturated monomer (a4) in consideration of foam quality and cost.

The above-mentioned radical-polymerization polymer containing metal salt-crosslinkable functional groups (PA) may be provided by the known polymerization technology.

Suited polymerization initiators include the known radical-polymerization initiators, for example oil-soluble

radical-polymerization initiators such as azobisisobutyronitrile or benzoyl peroxide, and water-soluble radical-polymerization initiators such as azobiscyanovaleric acid, azobisamidinopropane salt, ascorbic acid-hydrogen peroxide mixture (redox), potassium persulfate or sodium persulfate-sodium bisulfite mixture (redox). Preferred is a water-soluble radical-polymerization initiator.

The polymerization temperature in this production process is generally of from 0 to 120°C, preferably of from room temperature to 90°C.

From the standpoint of foam properties, the number average molecular weight of said radical-polymerization polymer containing metal salt-crosslinkable functional group (PA) is generally of from 5000 to 1000000, preferably of from 7000 to 100000.

② Polyaddition polymers containing metal salt-crosslinkable functional groups (PB)

Suited polyaddition polymers containing metal salt-crosslinkable functional groups (PB) as mentioned above include polyurethanes containing a metal salt-crosslinkable functional group (PB1) and epoxy resins containing a metal salt-crosslinkable functional group (PB2).

(1) Polyurethanes containing metal salt-crosslinkable functional groups (PB1)

The polyurethanes containing a metal salt-crosslinkable functional group (PB1) may be obtained by reacting a hydroxyl compound (b1) containing a metal salt-crosslinkable functional group (e.g. carboxyl), optionally together with some other active hydrogen-containing compounds (b2), with a polyisocyanate compound (b3).

(1-1) Hydroxyl compounds containing a metal salt-crosslinkable functional group (b1)

Suited hydroxyl compounds containing a metal salt-crosslinkable functional group (b1) include for example, carboxyl group-containing hydroxyl compounds, glycolic acid, lactic acid, dimethylolpropionic acid, and the alkylene oxide (hereinafter referred to as AO) addition products thereof. Among them, glycolic acid, lactic acid and the AO adition products thereof are preferred from cost point of view.

Suited AOs as mentioned above include ethylene oxide (hereinafter referred to as EO), propylene oxide (hereinafter referred to as PO), 1,2-, 2,3- or 1,3-butylene oxide, tetrahydrofuran (THF) and epichlorohydrin.

The AO mentioned above may be added in single form or in form of a combination of two or more AOs. In the latter case, the mode of addition may be block addition (chipped type, balanced type or active secondary type), random addition, or their mixed system [e.g. chipped after random addition, for example the adduct containing 0 to 50 weight % (preferably 5 to 40 weight %) of ethylene oxide chains randomly distributed in the molecule with 0 to 30 weight % (preferably 5 to 25 weight %) of the EO chains at the terminal ends of the molecule].

Among those species of AO, the exclusive EO, exclusive PO, exclusive THF, combination of PO and EO and combination of PO and/or EO-THF (the combination may be any of random and block types and their mixture) are preferred.

The number of AO molecules added is generally 1 to 400 moles, preferably 1 to 350 moles.

(1-2) Other active hydrogen-containing compounds (b2)

The other active hydrogen-containing compounds (b2) as mentioned above include the known high molecular weight polyols (b2-1), low molecular weight polyols (b2-2) and polyamines (b2-3) which are conventionally used in the production of polyurethanes.

Suited high molecular weight polyols (b2-1) as just mentioned above include polyalkylene ether polyols (b2-11), polyester polyols (b2-12), polymer polyols (b2-13), and polybutadiene polyols (b2-14), inclusive mixtures of two or more of, said polyols.

Suited polyalkylene ether polyols (b2-11) as mentioned above include compounds having a structure such as obtained by adding AOs to an active hydrogen atom-containing polyfunctional compound and to mixtures of two or more of such compounds.

The active hydrogen atom-containing polyfunctional compound as mentioned above is not particularly restricted but may include polyhydric alcohols, polyphenols, amines, polycarboxylic acids and phosphoric acid.

The polyhydric alcohols as mentioned above are not particularly restricted but may include dihydric alcohols such as ethylene glycol, propylene glycol, 1,3-butylene glycol, 1,4-butanediol, 1,6-hexanediol, diethylene glycol, neopentyl glycol, bis(hydroxymethyl)cyclohexane and bis(hydroxyethyl)benzene; and poly(3 to 8)hydric alcohols such as glycerin, trimethylolpropane, pentaerythritol, diglycerin, α-methylglucoside, sorbitol, xylitol, mannitol, dipentaerythritol, glucose, fructose and sucrose.

The polyphenol mentioned above is not particularly restricted but may include polyhydric phenols such as pyrogallol, catechol, hydroquinone, and bisphenols such as bisphenol A, bisphenol F and bisphenol S.

The amines mentioned above are not particularly restricted but may include ammonia, alkylamines of 1 to 20 carbon atoms (e.g. butylamine), monoamines such as aniline; aliphatic polyamines such as ethylenediamine, trimethylenediamine, hexamethylenediamine, and diethylenetriamine; heterocyclic polyamines such as piperazine, N-aminoethylpiperazine and those heterocyclic polyamines as described in Japanese Kokoku Publication Sho-55-21044; alicyclic polyamines such as dicyclohexylmethanediamine and isophoronediamine; aromatic polyamines such as phenylenediamine, tolylenediamine, diethyltolylenediamine, xylylenediamine, diphenylmethanediamine, diphenyletherdiamine and polyphenylmethanepolyamine; and alkanolamines such as monoethanolamine, diethanolamine, triethanolamine and triisopropanolamine.

The polycarboxylic acids as mentioned above are not particularly restricted but may include aliphatic polycarboxylic acids such as succinic acid and adipic acid; and aromatic polycarboxylic acids such as phthalic acid, terephthalic acid and trimellitic acid.

Said active hydrogen atom-containing compound may be used alone or in form of a combination of two or more species.

The above-mentioned AO added to said active hydrogen atom-containing compound may include, for example, the species of AO mentioned above for the hydroxyl compound containing a metal salt-crosslinkable functional group (b1). Either one or more than one species of AO may be employed and the mode of addition in the latter case includes the modes mentioned above for the hydroxyl compound containing a metal salt-crosslinkable functional group (b1).

The polyester polyols (b2-12) as mentioned above include condensed polyester diols which may be obtained by reacting a low molecular weight diol and/or a polyalkylene ether diol having a molecular weight of not more than 1000 with a dicarboxylic acid, further polylactonediols which may be obtained by ring-opening polymerization of lactones, and further polycarbonate diols obtainable by reacting a low molecular weight diol with a carbonic acid diester of a lower alcohol (e.g. methanol).

The above-mentioned low molecular weight diol is not particularly restricted but may include ethylene glycol, diethylene glycol, propylene glycol, dipropylene glycol, 1,4- or 1,3-butanediol, neopentyl glycol, 1,6-hexanediol; cyclic group-containing low molecular weight diols, for example bis(hydroxymethyl) cyclohexane, bis(hydroxyethyl) benzene, bisphenol A-EO adducts; and mixtures of two or more of said diols.

The above-mentioned polyalkylene ether diols having a molecular weight of not greater than 1,000 is not particularly restricted but may include, among others, polytetramethylene ether glycol, polypropylene glycol, polyethylene glycol and mixtures of two or more of them.

The above-mentioned dicarboxylic acids are not particularly restricted but may include, among others, aliphatic dicarboxylic acids such as succinic acid, adipic acid, azelaic acid or sebacic acid; further, aromatic dicarboxylic acids such as terephthalic acid, isophthalic acid or phthalic acid, and mixtures of two or more of them.

The above-mentioned lactones are not particularly restricted but may include, among others, ε-caprolactone, γ -butyrolactone, γ-valerolactone and mixtures of two or more of them.

The above-mentioned polyester polyols (b2-12) include polyethylene adipate diol, polybutylene adipate diol, polyhexamethylene adipate diol, polyneopentyl adipate diol, polyethylenepropylene adipate diol, polyethylenebutylene adipate diol, polybutylenehexamethylene adipate diol, polydiethylene adipate diol, poly(polytetramethylene ether) adipate diol, polyethylene azelate diol, polyethylene sebacate diol, polybutylene azelate diol, polybutylene sebacate diol, polycaprolactone diol or triol, and polyhexamethylene carbonate diol.

The above-mentioned polymer polyols (b2-13) are not particularly restricted but may include, among others, those polyols which may be obtained by polymerizing a radical-polymerizable monomer such as styrene, (meth)acrylonitrile, (meth)acrylic esters, vinyl chloride, and mixtures thereof in a polyol, for example said polyalkylene ether polyol (b2-11) and/or polyester polyols (b2-12) and dispersing the resulting polymer in finely divided state.

The above-mentioned polybutadiene polyols (b2-14) are not particularly restricted but may include those compounds having a 1,2-vinyl structure, and those compounds having a 1,2-vinyl structure and a 1, 4-trans structure, and those compounds having a 1,4-trans structure. The relative amount of the 1,2-vinyl structure and 1, 4-trans structure may be freely varied and may for example be in a molar ratio of 100:0 to 0:100. Moreover, the polybutadiene glycol, for instance, includes both the homopolymer and the copolymer (e.g. styrene-butadiene copolymer, acrylonitrile-butadiene copolymer, etc.), and even the hydrogenation products thereof (hydrogenation rate: 20 to 100%, for instance).

The number average molecular weight of said polybutadiene glycol is generally of from 500 to 10,000.

The number average molecular weight of said high molecular weight polyols (b2-1) is generally of from 500 to 20,000, preferably of from 500 to 10,000, more preferably of from 1,000 to 3,000.

The above-mentioned low molecular weight polyols (b2-2) include the polyhydric alcohols and polyphenols mentioned above as the starting material of said polyalkylene ether polyol.

The above-mentioned polyamines (b2-3) include aliphatic ($C_2$ to $C_{18}$) polyamines: for example, $C_2$ to $C_6$

alkylenediamines such as ethylenediamine, propylenediamine, trimethylenediamine, tetramethylenediamine and hexamethylenediamine; further, polyalkylene ($C_2$ to $C_6$) polyamines such as diethylenetriamine, iminobispropylamine, bis (hexamethylene)triamine, triethylenetetramine, tetraethylenepentaamine and pentaethylenehexamine; further, the alkyl ($C_1$ to $C_4$) or hydroxyalkyl ($C_2$ to $C_4$) substitution products thereof, such as dialkyl ($C_1$ to $C_3$) aminopropylamine, trimethylhexamethylenediamine, aminoethylethanolamine and methyliminobispropylamine; further alicycle- or heterocycle-containing aliphatic polyamines, such as 3,9-bis(3-aminopropyl)-2,4,8,10-tetraoxaspiro[5,5]undecane, further, aromatic ring-containing aliphatic amines ($C_8$ to $C_{15}$) such as xylylenediamine or tetrachloro-p-xylylenediamine:

further, alicyclic ($C_4$ to $C_{15}$) polyamines such as 1,3-diaminocyclohexane, isophoronediamine, menthanediamine, 4,4'-methylenedicyclohexanediamine (hydrogenated methylenedianiline);
further, heterocyclic ($C_4$ to $C_{15}$) polyamines: such as piperazine, N-aminoethylpiperazine, and 1,4-diaminopiperazine;
further, aromatic ($C_6$ to $C_{20}$) polyamines such as unsubstituted aromatic polyamines, for example, 1,2-, 1,3- and 1,4-phenylenediamines, 2,4'- and 4,4'-diphenylmethanediamine, crude diphenylmethanediamine, polyphenylpolymethylenepolyamine, diaminodiphenylsulfone, benzidine, thiodianiline, bis(3,4-diaminophenyl)sulfone, 2,6-diaminopyridine, m-aminobenzylamine, triphenylmethane-4,4',4"-triamine and naphthylenediamine, among others.

(1-3) Organic polyisocyanates (b3)

Suited organic polyisocyanates (b3) include those compounds which are conventionally used in the production of polyurethanes. Here, suited polyisocyanates include aromatic polyisocyanates containing 6 to 20 carbon atoms (exclusive of the carbon in the NCO group; the same applies hereinafter) (b3-1), aliphatic polyisocyanates having 2 to 18 carbon atoms (b3-2), alicyclic polyisocyanates having 4 to 15 carbon atoms (b3-3), aralkyl polyisocyanates having 8 to 15 carbon atoms (b3-4), and modification products of said polyisocyanates (b3-5), for example urethane, carbodiimide, allophanate, urea, biuret, urethodione, urethoimine, isocyanurate, or oxazolidone groups-containing modified polyisocyanates; and mixtures of two or more of them.

Suited above-mentioned aromatic polyisocyanates (b3-1), include, for example, 1,3- and/or 1,4-phenylene diisocyanate, 2,4- and/or 2,6-tolylene diisocyanate (TDI), crude TDI, 2,4'-and/or 4,4'-diphenylmethane diisocyanate (MDI), crude MDI [the reaction product of crude diaminophenylmethane [the condensation product of formaldehyde with an aromatic amine (aniline) or a mixture of aromatic amines; a mixture of diaminodiphenylmethane and a small proportion (e.g. 5 to 20 weight %) of tri- and polyfunctional polyamines] with phosgene: polyallyl polyisocyanate (PAPI)], 1,5-naphthylene diisocyanate, 4,4',4"-triphenylmethane triisocyanate, m- and p-isocyanatophenylsulfonyl isocyanate.

Further, the above-mentioned organic polyisocyanates (b3) include aliphatic polyisocyanates (b3-2) such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, 2-isocyanatoethyl-2,6-diisocyanatohexanoate, etc.

Further, the above-mentioned organic polyisocyanates (b3) include alicyclic polyisocyanates (b3-3) such as isophorone diisocyanate (IPDI), dicyclohexylmethane-4,4'-diisocyanate (hydrogenated MDI), cyclohexylene diisocyanate, methylcyclohexylene diisocyanate (hydrogenated TDI), bis(2-isocyanatoethyl) -4-cyclohexene-1,2-dicarboxylate and 2,5- and/or 2,6-norbornane diisocyanate.

Further, aralkyl polyisocyanates (b3-4) may be mentioned such as m- and/or p-xylylene diisocyanate (XDI) and $\alpha$, $\alpha$, $\alpha'$, $\alpha'$-tetramethylxylylene diisocyanate (TMXDI).

The fore-mentioned modification products (b3-5) of said polyisocyanates may include modified MDI (urethane-modified MDI, carbodiimide-modified MDI, trihydrocarbyl phosphate-modified MDI), urethane-modified TDI, and mixtures of two or more such species [e.g. combined use of modified MDI and urethane-modified TDI (a free isocyanate-containing prepolymer)]. Said urethane-modified polyisocyanate may be obtained by reacting an excess of the polyisocyanate (TDI, MDI or the like) with a polyol, and this polyol may comprise a hydroxy equivalent of from 30 to 200; here, suited polyols may include glycols such as ethylene glycol, propylene glycol, diethylene glycol or dipropylene glycol; further triols such as trimethylolpropane or glycerin; further polyfunctional polyols such as pentaerythritol or sorbitol; or the corresponding alkylene oxide (ethylene oxide and/or propylene oxide) adduct. Preferred, among them, are polyols each containing 2 to 3 functional groups.

The free isocyanate group content of said modified polyisocyanate or prepolymer is generally 8 to 33%, preferably 10 to 30%, more preferably 12 to 29%.

Among the above-mentioned kinds of organic polyisocyanates (b3), aromatic diisocyanates (b3-1) are preferred and TDI, MDI, crude MDI and carbodiimide-modified MDI are particularly preferred.

When preparing the above-mentioned polyurethanes containing metal salt-crosslinkable functional groups (PB1), the relative amounts of said polyisocyanates (b3) and said active hydrogen-containing compounds (b2) should

be selected such that the ratio of active hydrogen equivalent to the isocyanate equivalent is generally 0.6 to 1.6, preferably 0.7 to 1.5, more preferably 0.8 to 1.4.

The reaction temperature for the production of said metal salt-crosslinked functional group-containing polyurethanes (PB1) may be the same as the temperature used conventionally for polyurethane forming reactions and is generally of from 20 to 100°C when a solvent is used and is generally of from 20 to 220°C, preferably 150 to 200°C, when the reaction is conducted in absence of a solvent.

A catalyst which is usually employed in order to speed up the polyurethane forming reaction may be used; for example, an amine catalyst such as triethylamine, N-ethylmorpholine or triethylenediamine, or a tin catalyst such as trimethyltin laurate or dibutyltin dilaurate may be used.

(2) Epoxy resins containing metal salt-crosslinkable functional groups (PB2)

The epoxy resins containing metal salt-crosslinkable functional groups (PB2) may be obtained by reacting a hydroxyl compound containing a glycidylated metal salt-crosslinkable functional group (e.g. carboxyl group) (b4), optionally together with one or more other epoxy compounds (b5), with an epoxy curing agent (b6).

The above-mentioned hydroxyl compounds containing a metal salt-crosslinkable functional group (b1) as mentioned along with polyurethanes (PB1) may be used as starting materials for preparing the compounds (b4), and those compounds (b1) may be glycidylated by the known reactions. A typical procedure comprises adding epichlorohydrin to the hydroxyl group in the presence of an acid catalyst and then adding an alkaline compound to the reaction system for desalting to thereby glycidylate.

The other polyepoxy compounds (b-5) mentioned above include but are not limited to:

(b5-1): di- or polyphenol glycidyl ether type epoxy resins such as bisphenol A, bisphenol F, phenol or cresol novolac resin;
(b5-2): polyol polyglycidyl ether type epoxy resins such as polyalkylene oxide adducts of polyalkylene polyols such as polyethylene polyol, polypropylene polyol, or (b5-1) polyphenols;
(b5-3) : di- or polyglycidyl ester type epoxy resins which may be obtained from polycarboxylic acids such as adipic acid, dimer acid or hexahydrophthalic acid;
(b5-4): aliphatic or alicyclic polyepoxide type epoxy resins such as epoxidized polybutadiene, epoxidized vegetable oils, 3,4-epoxy-6-methylcyclohexylmethylcarboxylate, 3,4-epoxycyclohexylmethylcarboxylate, and combinations of two or more than two kinds of these compounds.

The preferred, among them, are liquid bisphenol A type epoxy resins having an epoxy equivalent of 150 to 340, liquid bisphenol F type epoxy resins having an epoxy equivalent of 155 to 250, diglycidyl ethers of polypropylene glycols having a molecular weight of 250 to 550, diglycidyl ethers of the bisphenol A polypropylene oxide adducts having a molecular weight of 300 to 2000, and mixtures thereof.

Together with said epoxy resin containing a metal salt-crosslinkable functional group (PB2), a monoepoxy reactive diluent may be added to the reaction system. Suited monoepoxy reactive diluents mentioned just above, include low-viscosity monoepoxy compounds such as butyl glycidyl ether, 2-ethylhexyl glycidyl ether, phenyl glycidyl ether, cresol glycidyl ether, butyl phenylglycidyl ether, tertiary carboxylic acid glycidyl ethers, styrene oxide, and glycidyl methacrylate. Preferred, among them, are 2-ethylhexyl glycidyl ether, phenyl glycidyl ether, cresol glycidyl ether, butylphenyl glycidyl ether and tertiary carboxylic acid glycidyl ethers.

The relative amount of said epoxy resin containing metal salt-crosslinkable functional groups (PB2) and monoepoxy reactive diluent, in combination use, is not particularly restricted, but, from workability points of view, is preferably such that the viscosity of the mixture will be 100 to 50000 cps at room temperature.

As the epoxy curing agent (b6) mentioned above, aliphatic polyamines and aliphatic polythiols may be used. The aliphatic polyamines are not particularly restricted but include polyalkylenepolyamines such as ethylenediamine, diethylenetriamine, triethylenetetramine, tetraethylenepentamine, pentaethylenehexamine, propylenediamine, dipropylenetriamine, hexamethylenediamine, or dihexamethylenetriamine; and alicyclic polyamines such as xylylenediamine, isophoronediamine, and 1,3-bisaminomethylcyclohexane. Among said aliphatic polythiols, ethanedithiol may be mentioned.

Furthermore, amine series curing agents for epoxy resin use, such as the polyamide-polyamine which is obtainable by condensation of a polymeric fatty acid, a higher aliphatic monocarboxylic acid and said polyamine, the polyamine-epoxy adduct obtainable by the addition reaction of a monoepoxy compound, a diepoxy compound and said polyamine, and the modified polyamine obtainable by the addition reaction of acrylonitrile, an $\alpha,\beta$-unsaturated carbonyl compound, e.g. an alkyl acrylate, and said polyamine may be used.

Preferred, among them, are polyamines which are soluble or-readily dispersible in water, for example triethylenetetramine, hexamethylenediamine, xylylenediamine, polyamide-polyamines having a total amine value of 280 to

450, xylylenediamine- or hexamethylenediamine-butyl glycidyl ether (1.5 to 2 mole) adduct, and xylylenediamine-acrylonitrile (1.8 mole) adduct.

(3) Addition-condensation polymers containing metal salt-crosslinkable functional groups (PC)

As the addition-condensation polymer containing metal salt-crosslinkable functional groups (PC), there may be used, for example, a phenolic resin containing metal salt-crosslinkable functional groups, an urea resin containing metal salt-crosslinkable functional groups and a melamine resin containing metal salt-crosslinkable functional groups.

The phenol resins containing metal salt-crosslinkable functional groups urea resins containing metal salt-crosslinkable functional groups and metal salt-crosslinkable function groups-containing melamine resins are the resol type phenolic resins, or urea- or melamine-formaldehyde primary condensates, which may be obtained by reacting an aromatic compound (c1) containing a metal salt-crosslinkable functional group (e.g. carboxyl group), a phenolic compound, urea or melamine (c2) and an aldehyde compound.

The carboxyl group-containing aromatic compounds (c1) mentioned above are not particularly restricted but include aromatic monocarboxylic acids such as benzoic acid, or salicylic acid, and aromatic polycarboxylic acids such as phthalic acid, isophthalic acid, terephthalic acid, trimellitic acid and pyromellitic acid.

(3-1) Resol type phenolic resins

The resol type phenolic resins are condensation products in an unhardened (primary condensate) stage which corresponds to the resol stage (Bakelite A) or to the resitol stage (Bakelite B) having proceeded further therefrom. The resins may be obtained by the primary condensation reaction of a carboxyl group-containing aromatic compound (c1) and a phenolic compound with an aldehyde compound in the presence of a basic catalyst such as sodium hydroxide, barium hydroxide, or a tertiary amine such as triethylenediamine or trisdimethylaminophenol.

The phenolic compounds mentioned above are not particularly restricted but may include phenol; mono- or dialkylphenols such as cresol, xylenol, butylphenol, octylphenol, and nonylphenol; further halogenated phenols such as chlorophenol; and styrenated phenol.

The aldehyde compounds are not particularly restricted but may include, for example, formaldehyde, paraformaldehyde and acetaldehyde.

In the above production process, the molar ratio of the carboxyl group-containing aromatic compounds (c1) and phenolic compounds to the aldehyde compounds is generally within the range of 1:1 to 1:3. The molar ratio of the carboxyl group-containing aromatic compounds (c1) to the phenolic compounds is generally within the range of 1:1 to 9:1.

The resol type phenolic resin is a primary condensation product having a nonvolatile matter content of not less than 75 weight %, with the amount of unreacted phenol having been reduced as far as possible. All that is necessary is that its degree of condensation is within the range of 2 to 10 and that it is a liquid of low to high viscosity at room temperature.

It is also possible to use said resol type phenolic resin after addition of a lower alcohol for improved shelf-life.

Preferred, among various species of the resol type phenolic resin, is a primary condensate having a viscosity of 300 to 20000 cps/25°C and a nonvolatile matter content of 70 to 100% which may be obtained by condensing said carboxyl group-containing aromatic compound (c1), phenolic compound and formalin in a molar ratio of 1:1:(3.0 to 4.0).

(3-2) Urea- or melamine-formaldehyde primary condensates

The urea- or melamin-formaldehyde.primary condensates may be obtained by, for example, reacting (primarily condensing) said carboxyl group-containing aromatic compound (c1), urea or melamine, and an aldehyde compound such as formaldehyde or paraformaldehyde in the presence of a basic catalyst such as sodium hydroxide or barium hydroxide (while the reaction system is maintained at neutral or basic pH by sequential addition of said catalyst).

In the above process, the molar ratio of said carboxyl group-containing aromatic compound (c1) and urea or melamine to said aldehyde compound is generally within the range of 1:1 to 1:5. Moreover, the molar ratio of said carboxyl group-containing aromatic compound (c1) to urea or melamine is generally 1:1 to 9:1. The urea- or melamin-formaldehyde primary condensate is preferably one having a nonvolatile matter content of not less than 75 weight % with the amount of unreacted urea or melamine having been reduced as far as possible. All that is necessary is that its degree of condensation is 2 to 6 and that it is a liquid of low to high viscosity at room temperature.

As the urea- or melamine-formaldehyde primary condensate, it is also possible to use the corresponding alkyl etherified primary condensate obtainable by adding a lower alcohol for improved shelf-life.

Preferred, among various species of the urea- or melamine-formaldehyde primary condensates, is a primary condensation product having a viscosity of 220 to 35000 cps/25°C and a nonvolatile matter content of 60 to 90% which.

is obtainable by reacting said carboxyl group-containing aromatic compound (c1), (urea or melamine) and formaldehyde in a molar ratio of 1:1:(3.0 to 5.0).

Inorganic substance (II)

In the present invention, the inorganic substance (II) and said metal salt-crosslinked organic polymer expanded matrix (I) constitute the foam of the present invention.
In the foam of the present invention, said inorganic substance (II) exists in a dispersed state and functions as a flame retardance improving agent.
The inorganic substance (II) mentioned above is at least one member selected from the group including metals, metal compounds and nonmetalic inorganic fillers.
The metals mentioned just above are not particulary restricted but may include Group IIIa and Group IVa metals, e.g. aluminum and tin, and transition metals, e.g. iron, nickel, copper and zinc. Those metals may be in the form of metal whiskers.
The metal compounds mentioned above may for example be a metal salt, a metal oxide or a metal hydroxide. As a metal salt, for example, the carbonates, sulfates, acetates, borates, phosphates, nitrates and other salts of alkali metals (e.g. sodium, potassium and cesium); alkaline earth metals (e.g. magnesium, calcium and barium); Group IIIa and Group IVa metals (e.g. aluminum, germanium and tin) or transition metals (e.g. iron, cobalt, nickel, copper, zinc) may be used.
As the metal oxide mentioned above, the oxides of said alkaline earth metals, Group IIIa and IVa metals, or transition metals may be used.
As the metal hydroxide mentioned, the hydroxides of said alkaline earth metals, Group IIIa and Group IVa metals or transition metals may be used.
The above-mentioned nonmetalic inorganic fillers are not particularly restricted but include carbon black, ceramic fibers, glass fibers and bentonite.
From flame retardance points of view, the preferred among the above-mentioned kinds of the inorganic substances (II) are metal hydroxides, with aluminum hydroxide and magnesium hydroxide being particularly preferred.
In the present invention, the foam comprising said metal salt-crosslinked organic polymer expanded matrix (I) and inorganic substance (II) may be manufactured by the following processes, for instance.

1. The process in which said organic polymer containing metal salt-crosslinkable functional groups and said metal or metal compound are subjected to crosslinking and expansion in the presence of an inorganic substance (II) optionally together with a blowing agent. In this process, the crosslinking and expansion proceed concurrently.
2. The process in which said monomer containing a metal-crosslinkable functional group is subjected to concurrent polymerization, crosslinking with a metal or a metal compound and expansion in the presence of an inorganic substance (II) optionally together with a blowing agent. In this process, the crosslinking and expansion proceed concurrently.
3. The process in which a metal salt-crosslinked monomer is subjected to concurrent polymerization and expansion in the presence of an inorganic substance (II) and a blowing agent.

In this specification, the term "metal salt-crosslinked monomer" means a monomer linked to another monomer by metal salt crosslinking.
In the above production processes 1, 2 and 3, the blowing agent need not be used when the metal compound acts as a blowing agent.
The concrete procedures for preparing in the case of using the radical-polymerization polymer containing metal salt-crosslinkable functional groups (PA) as the organic polymer in said expanded matrix (I) are as follows.
When the above-mentioned process 1 is used, said radical-polymerization polymer containing metal salt-crosslinkable functional groups (PA) and said metal or metal compound are subjected to concurrent crosslinking and expansion in the presence of said inorganic substance (II) optionally together with a blowing agent to provide the foam.
When the above-mentioned process 2 is used, said sulfonic acid group-containing unsaturated monomer (a2) or phosphate group-containing unsaturated monomer (a3), optionally together with said other unsaturated monomer (a4), and said metal or metal compound are subjected to concurrent polymerization, metal salt-crosslinking and expansion in the presence of an inorganic substance (II) optionally together with a blowing agent to provide the foam.
When the above-mentioned process 3 is used, said sulfonic acid group-containing unsaturated monomer (a2) or phosphate group-containing unsaturated monomer (a3) is used to prepare a metal salt-crosslinked monomer in advance, and this metal salt-crosslinked monomer, optionally together with (a4), is subjected to concurrent polymerization and expansion in the presence of an inorganic substance (II) and a blowing agent to provide the foam.
The concrete procedures for preparing when said polyurethane containing metal salt-crosslinkable functional

groups (PB1) is used as said organic polymer in said expanded matrix (I) are as follows.

When the above-mentioned process 1 is used, the polyurethane containing metal salt-crosslinkable functional groups (PB1) and said metal or metal compound are subjected to concurrent crosslinking and expansion in the presence of an inorganic substance (II) optionally together with a blowing agent to provide the foam.

When the above-mentioned process 2 is used, said metal salt-crosslinkable functional group (carboxyl)-containing hydroxyl compound (b1), optionally together with said other active hydrogen-containing compound (b2), is subjected to concurrent reaction with said polyisocyanate compound (b3), crosslinking with metal or metal compound, and expansion in the presence of an inorganic substance (II) optionally together with a blowing agent to provide the foam.

When the above-mentioned process 3 is used, a metal salt-crosslinked monomer is prepared from said metal salt-crosslinkable functional group (carboxyl)-containing hydroxyl compound (b1) in advance and the above-mentioned metal salt-crosslinked monomer, optionally together with said other active hydrogen-containing compound (b2), is subjected to concurrent reaction with said polyisocyanate compound (b3) and expansion in the presence of an inorganic substance (II) and a blowing agent to provide the foam.

As a concrete example of said metal salt-crosslinked monomer, when said metal salt-polymerizable functional group-containing hydroxyl compound (b1) is glycolic acid and said polyvalent metal is magnesium, for instance, is the following compound.

$$HOCH_2COO\text{-}Mg\text{-}OCOCH_2OH$$

Concrete procedures for preparing when said epoxy resin containing metal salt-crosslinkable functional groups (PB2) is used as the organic polymer in said expanded matrix (I) are as follows.

When the above-mentioned process 1 is used, said epoxy resin containing metal salt-crosslinkable functional groups (PB2) and said metal or metal compound are subjected to concurrent crosslinking and expansion in the presence of an inorganic substance (II) optionally together with a blowing agent to provide the foam.

When the above-mentioned process 2 is used, the glycidyl compound (b4) prepared from said metal salt-crosslinkable functional group (carboxyl)-containing hydroxyl compound, optionally together with said other epoxy compound (b5), is subjected to concurrent reaction with said epoxy curing agent (b6), crosslinking with a metal or metal salt and expansion in the presence of an inorganic substance (II) optionally together with a blowing agent.

When the above-mentioned process 3 is used, a metal salt-crosslinked monomer is prepared from the glycidyl compound (b4) prepared from said metal salt-crosslinkable functional group (carboxyl)-containing hydroxyl compound in advance and this metal salt-crosslinked monomer, optionally together with said other epoxy compound (b5), is subjected to concurrent reaction with said epoxy curing agent (b6) and expansion in the presence of an inorganic substance (II) and a blowing agent to provide the foam.

As a concrete example of said metal salt-crosslinked monomer, when said glycidyl compound (b4) prepared from said hydroxyl compound containing a metal salt-crosslinkable functional group is the glycidylation product of glycolic acid and said polyvalent metal is magnesium, for instance, is the following compound.

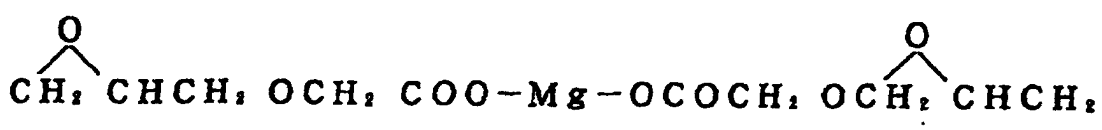

Concrete procedures for preparing, when said addition-condensation polymer containing metal salt-crosslinkable functional groups (PC) is used as the organic polymer in said expanded matrix (I), are as follows.

When the above-mentioned process 1 is used, said addition-condensation polymer containing metal salt-crosslinkable functional groups (PC) and said metal or metal compound are subjected to concurrent crosslinking and expansion in the presence of an inorganic substance (II) optionally together with a blowing agent to provide the foam.

When the above-mentioned process 2 is used, said metal salt-crosslinkable functional group (carboxyl)-containing aromatic compound (c1), phenolic compound, urea or melamine (c2), and said aldehyde compound are subjected to concurrent reaction, crosslinking with a metal or a metal compound and expansion in the presence of an inorganic substance (II) optionally together with a blowing agent to provide the foam.

When the above-mentioned process 3 is used, a metal salt-crosslinked monomer is prepared from said metal salt-crosslinkable functional group (carboxyl)-containing aromatic compound (c1) in advance and this metal salt-crosslinked monomer, said phenolic compound, urea or melamine (c2), and said aldehyde compound are subjected to concurrent reaction and expansion in the presence of an inorganic substance (II) and a blowing agent to provide the foam.

A concrete example of said metal salt-crosslinked monomer, when said aromatic compound containing a metal-crosslinkable functional group (c1) is benzoic acid and said polyvalent metal is magnesium, for instance, is the following compound.

$$C_6H_5COO\text{-}Mg\text{-}OCOC_6H_5$$

Suitable other optional components may be incorporated in the foam of the present invention. For example, polyethylene glycol (mol. wt. 100 to 100,000), dyes and pigments, cellulose, starch, flame retardants such as trischloroethyl phosphate or trischloropropyl phosphate, silicon- or fluorine-containing foam stabilizers and water, may be used.
The amount of such optional components is not particularly restricted but, in consideration of foam quality, it should generally be not greater than 50 weight %, preferably not greater than 20 weight %, based on the product foam.
The expansion ratio of the foam of the present invention may be freely selected according to the intended use but, from the standpoint of foam quality, is generally 5 to 100 times, preferably 5 to 50 times, more preferably 5 to 40 times.
The density of the foam of the present invention may also be freely selected according to the intended use but from the standpoint of foam quality, is generally 0.02 to 0.30 g/$m^3$, preferably 0.03 to 0.25 g/$cm^3$, more preferably 0.03 to 0.20 g/$cm^3$.
As produced by the above-described technology, the foam of the present invention may be provided in the quality grades corresponding to Flame Retardance Grade 1 or 2 under JIS A-1321.
The foam of the present invention may be provided in the form of a shaped article which may be a board, a sheet, a film, a bar, a cylinder or the like. It is also possible to apply any of the known expansion-foaming techniques such as RIM and the known processing techniques such as transfer molding. Moreover, the foam of the present invention may be subjected to surface treatment such as coating, and other after-treatments such as saturation with a fragrance.
As the uses for the foam of the present invention, structural materials (e.g. steel reinforcement cores), protective materials (e.g. packing and other cushioning materials), heat insulating materials (heat-insulating boards etc.) and sound insulating materials (e.g. acoustic boards), among others, may be mentioned.

BEST MODE FOR CARRYING OUT THE INVENTION

In the following, the present invention is illustrated by examples in further detail and should by no means be construed as defining the scope of the invention. In the following description, all "parts" and "%" are by weight.
The compositions and symbols of the starting materials used in the examples and comparative examples are as follows.

| | |
|---|---|
| AAc | acrylic acid |
| AAc-Z | zinc diacrylate |
| St | styrene |
| PAAc | a polyacrylic acid with a number average molecular weight of about 10000 |
| DHA | dipentaerythritol hexaacrylate |
| Chlorofluorocarbon | Daiflon 141b, manufactured by Daicel Chemical Co., Ltd. |
| Polymeric MDI | Coronate MR-200, manufactured by Nippon Polyurethane Industry, Co., Ltd. |
| PBAAc | a butyl acrylate-acrylic acid copolymer (acrylic acid content: 20 wt. %) having an average molecular weight of about 10000 |
| Reactive emulsifier | Eleminol RS-30, manufactured by Sanyo Kasei Co., Ltd. |
| Urethane forming catalyst | Polycat 41, manufactured by Sun-Apro Co., Ltd. |
| Foam stabilizer | SZ-1627, manufactured by Nippon Unicar Co., Ltd. |

PREPARATION OF STARTING MATERIALS

Production Example 1 :

152 g of glycolic acid and 315.3 g of barium hydroxide ($8H_2O$) were reacted at 25°C for 1 hour in water. This reaction product was dehydrated, crushed and further dried at 120°C for 2 hours. Then, using 2 g of triethylamine as catalyst, 176 g of ethylene oxide was added, whereby a polyether diol having a hydroxyl value of 240 (Compound A)

was obtained.

Production Example 2 :

1 g of boron trifluoride-diethyl ether complex salt as catalyst, and 277.5 g (3 moles) of epichlorohydrin were added dropwise to 463.3 g of the above compound A. The addition reaction was carried out at 60 °C for about 2 hours. Then, 160 g of 50% sodium hydroxide in water was added and the desalting reaction was carried out at 25°C for 4 hours. Then, water was removed to provide a diglycidyl compound having an epoxy equivalent of 334 (Compound B).

Production Example 3 :

138 g of salicylic acid and 94 g of phenol were stirred at 20 to 30°C in water. Using 4 g of sodium hydroxide as catalyst, 284 g of formalin was added dropwise under cooling. The reaction was carried out at 90°C for 2.5 hours. Sodium hydroxide was gradually added during the reaction to maintain the pH of the reaction system at 8.5 to 9.5. The reaction mixture was then adjusted to pH 7 to 8 with p-toluenesulfonic acid and then cooled, and the unreacted starting materials and part of the water of condensation were removed from the system under reduced pressure to provide a liquid resol type phenolic resin having a nonvolatile matter content of 76% and a viscosity of 21000 cps (Compound C).

Production Example 4 :

138 g of salicylic acid and 60 g of urea were stirred at 20 to 30°C in water. Using 4 g of sodium hydroxide as catalyst, 284 g of formalin was added dropwise under cooling. The reaction was then carried out at 90°C for 2.5 hours. Sodium hydroxide was gradually added during the reaction to maintain the pH of the reaction system at 8.5 to 9.5. The reaction mixture was then adjusted to pH 7 to 8 with p-toluenesulfonic acid and then cooled, and the unreacted starting materials and part of the water of condensation were removed from the system under reduced pressure to provide a liquid urea-formaldehyde primary condensate having a nonvolatile matter content of 75% and a viscosity of 25000 cps (Compound D).

Production Example 5 :

138 g of salicylic acid and 126 g of melamine were stirred at 20 to 30°C in water. Using sodium hydroxide as catalyst, 284 g of formalin was added dropwise under cooling. The reaction was then carried out at 90°C for 2.5 hours. Sodium hydroxide was gradually added during the reaction to maintain the pH of the reaction system at 8.5 to 9.5. The reaction mixture was then adjusted to pH 7 to 8 with p-toluenesulfonic acid and then cooled, and the unreacted starting materials and part of the water of condensation were removed from the system under reduced pressure to provide a liquid melamine-formaldehyde primary condensate having a nonvolatile matter content of 75% and a viscosity of 19000 cps (Compound E).

EXAMPLES AND COMPARATIVE EXAMPLES

Examples 1 and 2:

Referring to Table 1, Mixture A, Mixture B, ascorbic acid and hydrogen peroxide (35%) were mixed in the indicated ratio and the resulting mixture was placed in a mould. Almost instantly, the mixture underwent polymerization and expansion to give a foam in several minutes. Some physical properties of these foam are stated in Table 1.

Example 3:

Referring to Table 1, Mixture A, Mixture B and the urethanation catalyst were mixed in the indicated ratio and the resulting mixture was placed in a mould. The mixture underwent polymerization and expansion after 5 seconds and gave a foam in several minutes. Some physical properties of this foam are stated in Table 1.

Example 4 :

Referring to Table 1, Mixture A and Mixture B were mixed in the indicated ratio and the resulting mixture was placed in a mould. The filled mould was allowed to set in an oven at 100°C for 20 minutes to enable expansion and crosslinking to take place providing a foam. Some physical properties of this foam are stated in Table 1.

Examples 5 to 7 :

Referring to Tables 1 and 2, Mixture A and Mixture B were mixed in the indicated ratio and the resulting mixture was placed in a mould. This mould was allowed to set in an oven at 120°C for 2 hours to enable expansion and crosslinking to take place providing a foam. Some physical properties of this foam are stated in Tables 1 and 2.

Comparative Example 1 :

Referring to Table 2, Mixture A and Mixture B were adjusted to a temperature of 80°C and mixed in the indicated ratio and the resulting mixture was placed in a mould. This mould was allowed to set in an oven at 100°C for 20 minutes to enable expansion and crosslinking to take place providing a foam. Some physical properties of these foams are stated in Table 2.

Comparative Example 2 :

Using a Bambery mixer, 2 weight parts of PBAAc pellets and 3 weight parts of calcium carbonate powder were kneaded to prepare a pelletized calcium carbonate master batch (Mixture B). These Mixture B and Mixture A (a mixture of 100 weight parts of PBAAc and 0.5 weight part of foam stabilizer), in the ratio indicated in Table 2, were fed to a melt-kneading extruder and molded at an extrusion rate of 10 kg/hour, at a resin pressure of 190 $kg/cm^2$ and at a resin temperature of 180°C to provide a foam. Some physical properties of this foam are stated in Table 2.

Table 1

| | | Example | | | | | |
|---|---|---|---|---|---|---|---|
| | | 1 | 2 | 3 | 4 | 5 | 6 |
| Mixture A | AAc | 100 | 0 | 0 | 0 | 0 | 0 |
| | St | 0 | 50 | 0 | 0 | 0 | 0 |
| | DHA | 10 | 0 | 0 | 0 | 0 | 0 |
| | Compound A | 0 | 0 | 100 | 0 | 0 | 0 |
| | Compound B | 0 | 0 | 0 | 100 | 0 | 0 |
| | Compound C | 0 | 0 | 0 | 0 | 100 | 0 |
| | Compound D | 0 | 0 | 0 | 0 | 0 | 100 |
| | Chorofluorocarbon | 0 | 20 | 20 | 20 | 0 | 0 |
| | Reactive emulsifier | 0 | 1 | 0 | 0 | 0 | 0 |
| | Foam satabilizer | 0.5 | 0.5 | 0.5 | 0.5 | 0.5 | 0.5 |
| Mixture B | $CaCO_3$ | 70 | 10 | 10 | 10 | 0 | 0 |
| | $BaCO_3$ | 0 | 0 | 0 | 0 | 45 | 34 |
| | AAc-Z | 0 | 50 | 0 | 0 | 0 | 0 |
| | Water | 30 | 50 | 0 | 0 | 45 | 34 |
| | Polymeric MDI | 0 | 0 | 50 | 0 | 0 | 0 |
| | Diethylenetriamine | 0 | 0 | 0 | 31 | 0 | 0 |
| | Ascorbic acid | 0.1 | 0.4 | 0 | 0 | 0 | 0 |
| | Hydrogen peroxide | 0.02 | 0.2 | 0 | 0 | 0 | 0 |
| | Urethanation catalyst | 0 | 0 | 2.0 | 0 | 0 | 0 |
| Result | Density | 30 | 30 | 50 | 70 | 50 | 50 |
| | Expansion ratio | 35 | 35 | 20 | 15 | 20 | 20 |
| | Compressive strength | 3.0 | 3.5 | 1.5 | 2.0 | 1.5 | 1.5 |
| | Flame retardance | | | | | | |
| | Burning rate | 0.5 | 0.5 | 1.0 | 1.2 | 0.7 | 0.8 |
| | Temperature-time area | 0 | 0 | 43 | 61 | 28 | 20 |
| | Emitting smoke factor | 20 | 25 | 35 | 42 | 34 | 26 |
| | Afterflame time | 0 | 0 | 15 | 20 | 8 | 6 |
| | Electrification | Excellent | Excellent | Excellent | Excellent | Excellent | Excellent |
| | Heat insulating coefficient | 0.04 | 0.04 | 0.04 | 0.04 | 0.04 | 0.04 |
| | Sound insulating property | 25 | 20 | 25 | 20 | 20 | 20 |
| | M | 11 | 15 | 19 | 15 | 19 | 15 |
| | S | 18 | 9 | 6 | 9 | 6 | 5 |

Table 2

| | | Ex. | Compar. Ex. | |
|---|---|---|---|---|
| | | 7 | 1 | 2 |
| Mixture A | Compound E | 100 | 0 | 0 |
| | PAAc | 0 | 100 | 0 |
| | Water | 0 | 100 | 0 |
| | PBAAc | 0 | 0 | 100 |
| | Foam satabilizer | 0.5 | 0.5 | 0.5 |
| Mixture B | $CaCO_3$ | 0 | 5 | 3 |
| | $BaCO_3$ | 52 | 0 | 0 |
| | Water | 52 | 5 | 0 |
| | PBAAc | 0 | 0 | 2 |
| Result | Density | 70 | 500 | 300 |
| | Expansion ratio | 15 | 2.2 | 3.3 |
| | Compressive strength | 3.5 | 4.5 | 5.5 |
| | Flame retardance | | | |
| | Burning rate | 1.0 | 5.2 | 5.8 |
| | Temperature-time area | 80 | 210 | 360 |
| | Emitting smoke factor | 57 | 150 | 250 |
| | Afterflame time | 22 | 45 | 60 |
| | Electrification | Excellent | Good | Good |
| | Heat insulating coefficient | 0.04 | 0.10 | 0.12 |
| | Sound insulating property | 25 | 5 | 7 |
| | M | 21 | 1.2 | 0.7 |
| | S | 7 | 3.1 | 1.8 |

The physical properties as stated in Table 1 and Table 2 have been obtained in the following manner :

Density: (kg/m$^3$): according to JIS K 6310
Compressive strength: (kg/cm$^2$): according to JIS A 9514
Flame retardance:
Burning rate: (cm/min): according to JIS A 9514
Temperature-time area: (°C·min.): according to JIS A 1321.
Emitting smoke factor: (CA): according to JIS A 1321
Afterflame time: (sec.): according to JIS A 1321
Electrification: the electrification at 25°C and 50% R.H. was tested and evaluated on a rating scale of Excellent, Good, Fair and Poor [any level below the prior art foam was rated Poor]
Thermal conductivity: (Kcal/m·h·°C): according to JIS A 9514
Sound insulating property: (dB): according to JIS A 1416

The weight % (M) of the metal forming the metal salt-crosslinks and the weight % (S) of inorganic matter: Powders of the foam as such are analyzed by X-ray diffraction analysis to find the weight % (S) of the inorganic matter. Then, powders prepared by incinerating the foam were analyzed to determine the weight of the metal oxide. From this weight, the weight of the metal oxide derived from the inorganic matter is subtracted and the weight % (M) of the metal foaming the metal salt crosslinks is calculated from the balance of metal content.

The following X-ray generator and detector (goniometer) were used.

X-ray generator:

RU-200R (rotary paired cathode type) manufactured by Rigaku Denki, K.K.
X-ray source: CuKα line, with curved crystal monochromator
Power output: 40 kV, 150 mA

Goniometer:

Model 2155D, manufactured by Rigaku Denki, K.K.
Slit system: 1°-0.15 mm-1°-0.45 mm
Detector: scintillation counter

INDUSTRIAL APPLICABILITY

The foam of the present invention is outstanding in electrification and heat insulating and sound insulating properties and has high compressive strength even when it is low in density. Moreover, since it contains no material with a high ecological load, the generation of noxious gases and soot due to incomplete combustion is not remarkable, nor is an excessive generation of heat of combustion involved. Therefore, the foam of the present invention is useful for such applications as, for example, a heat insulating material, a structural material, a protective material, a sound insulating material. The used foam can be burnt in admixture with other general refuses in ordinary incinerators and imposes little burden on the environment, thus enabling application with great advantage in power generation using the refuse, for instance.

**Claims**

1. A foam comprising an organic polymer expanded matrix (I) and at least one kind of inorganic substance (II) selected from the group consisting of metals, metal compounds and non-metal inorganic fillers, wherein
said expanded matrix (I) contains metal salt-crosslinks and
said organic polymer is at least one polymer selected from the group consisting of a radical-polymerization polymer containing metal salt-crosslinkable functional groups, a polyaddition polymer containing metal salt-crosslinkable functional groups and an addition-condensation polymer containing metal salt-crosslinkable functional groups;
in which the radical-polymerization polymer containing metal salt-crosslinkable functional groups contains as a constituent monomer an unsaturated monomer containing a metal salt-crosslinkable functional group and optionally other unsaturated monomers (a4), and the unsaturated monomer containing a metal salt-crosslinkable functional group is selected from the group consisting of a sulfonic acid group-containing unsaturated monomer (a2) and a phosphate group-containing unsaturated monomer (a3), and
the relation between the weight percentage (M) of the metal forming said metal salt-crosslinks in the expanded matrix (I) based on the total weight of the expanded matrix (I) and the inorganic substance (II) and the weight percentage (S) of the inorganic substance (II) based on the total weight of the expanded matrix (I) and the inorganic substance (II) satisfies the following expression.

$$M \geq 10 - S/4 \quad (1)$$

wherein $M \leq 50$, $S \geq 5$.

2. The foam according to Claim 1 wherein the expanded matrix (I) Is a matrix expanded using at least one member selected from the group consisting of metal carbonates and metal hydrogencarbonates.

3. The foam according to Claim 1 or 2 wherein the metal forming said metal salt-crosslinks in the expanded matrix (I) is at least one polyvalent metal selected from the group consisting of calcium, magnesium, zinc, barium, aluminium and iron.

4. The foam according to any of Claims 1 to 3 which has an expansion ratio of 5 to 50.

5. The foam according to any of Claims 1 to 4 wherein the organic polymer is at least one polymer selected from the group consisting of polystyrenes containing metal salt-crosslinkable functional groups, polyurethanes containing metal salt-crosslinkable funtional groups, epoxy resins containing metal salt-crosslinkable functional groups, phenolic resins containing metal salt-crosslinkable functional groups, urea resins containing metal salt-crosslinkable functional groups and melamine resins containing metal salt-crosslinkable functional groups.

6. The foam according to any of Claims 1 to 5 wherein the metal salt-crosslinkable functional group is at least one group selected from the group consisting of carboxyl group, sulfonic acid group and phosphate group.

7. The foam according to any of Claims 1 to 6 wherein the inorganic substance (II) is at least one member selected from the group consisting of metal oxides and metal hydroxides.

8. The foam according to Claim 7 wherein the metal hydroxide is at least one member selected from the group consisting of aluminium hydroxide and magnesium hydroxide.

9. The foam according to any of Claims 1 to 8 which has a flame retardance corresponding to Grade 1 or Grade 2 under JIS A-1321.

10. A heat insulating material, a structural material, a protective material or a sound insulating material which comprises the foam according to any of Claims 1 to 9.

11. A process for producing a metal salt-crosslinked foam according to any of Claims 1 to 10 which comprises subjecting an organic polymer containing a metal salt-crosslinkable functional group to crosslinking with a metal or metal compound and expansion in the presence of an inorganic substance (II).

12. A process for producing a metal salt-crosslinked foam according to any of Claims 1 to 10 which comprises subjecting a metal salt-crosslinkable functional group-containing monomer to concurrent polymerization, crosslinking with a metal or metal compound and expansion in the presence of an inorganic substance (II).

13. The process according to Claim 11 or 12 wherein a blowing agent is additionally present.

14. A process for producing a metal salt-crosslinked foam according to any of Claims 1 to 10 which comprises subjecting a metal salt-crosslinked monomer to concurrent polymerization and expansion in the presence of an inorganic substance (II) and a blowing agent.

15. A process for producing a metal salt-crosslinked foam which comprises subjecting a metal salt-crosslinked monomer to concurrent polymerization and expansion in the presence of an inorganic substance (II) and a blowing agent.

**Patentansprüche**

1. Schaumstoff, enthaltend
eine geschäumte Matrix (I) aus einem organischen Polymer, und
wenigstens eine Art von anorganischer Substanz (II), ausgewählt aus Metallen, Metallverbindungen und nichtmetallischen, anorganischen Füllstoffen,
wobei diese geschäumte Matrix (I) Metallsalz-Vernetzungsstellen aufweist;
wobei dieses organische Polymer wenigstens ein Polymer ist, das ausgewählt ist aus einer Gruppe, die umfasst:

- Radikalpolymerisationspolymere, die funktionelle Gruppen enthalten, die mit einem Metallsalz vernetzbar sind;
- Polyadditionspolymere, die funktionelle Gruppen enthalten, die mit einem Metallsalz vernetzbar sind; und

- Additions-Kondensationspolymere, die funktionelle Gruppen enthalten, die mit einem Metallsalz vernetzbar sind;

wobei das mit einem Metallsalz vernetzbare funktionelle Gruppen enthaltende Radikalpolymerisationspolymer seinerseits enthält:

- als konstituierendes Monomer ein ungesättigtes Monomer, das eine funktionelle Gruppe enthält, die mit einem Metallsalz vernetzbar ist; und
- wahlweise andere ungesättigte Monomere (a4); und
- dieses ungesättigte, mit einem Metallsalz vernetzbare funktionelle Gruppe(n) enthaltende Monomer aus einer Gruppe ausgewählt ist, die umfasst:
  - -- Sulfonsäuregruppe(n) enthaltende Monomere (a2); und
  - -- Phosphatgruppe(n) enthaltende Monomere (a3); und

wobei das Verhältnis
zwischen
dem Gewichtsprozentanteil (M) des Metalls, das diese Metallsalz-Vernetzungsstellen in der geschäumten Matrix (I) bildet, bezogen auf das Gesamtgewicht an geschäumter Matrix (I) und anorganischer Substanz (II)
und
dem Gewichtsprozentanteil (S) der anorganischen Substanz (II), bezogen auf das Gesamtgewicht an geschäumter Matrix (I) und anorganischer Substanz (II) der nachfolgenden Bedingung (1) genügt:

$$M \geq 10 - S/4$$

**mit $M \leq 50$ und $S \geq 5$.**

**2.** Schaumstoff nach Anspruch 1,
**dadurch gekennzeichnet, dass**
die geschäumte Matrix (I) eine Matrix ist, die mit Hilfe wenigstens einer Verbindung verschäumt worden ist, die aus Metallcarbonaten und Metallhydrogencarbonaten ausgewählt ist.

**3.** Schaumstoff nach Anspruch 1 oder 2,
**dadurch gekennzeichnet, dass**
das, diese Metallsalz-Vernetzungsstellen in der geschäumten Matrix (I) bildende Metall wenigstens ein mehrwertiges Metall ist, nämlich Calcium, Magnesium, Zink, Barium, Aluminium oder Eisen.

**4.** Schaumstoff nach einem der Ansprüche 1 bis 3,
**dadurch gekennzeichnet, dass**
der Schaumstoff ein Verschäumungsverhältnis von 5 bis 50 aufweist.

**5.** Schaumstoff nach einem der Ansprüche 1 bis 4,
**dadurch gekennzeichnet, dass**
das organische Polymer wenigstens ein Polymer ist, das aus einer Gruppe ausgewählt ist, die umfasst:

- Polystyrole, die funktionelle Gruppen enthalten, die mit einem Metallsalz vernetzbar sind;
- Polyurethanharze, die funktionelle Gruppen enthalten, die mit einem Metallsalz vernetzbar sind;
- Epoxyharze, die funktionelle Gruppen enthalten, die mit einem Metallsalz vernetzbar sind;
- Phenolharze, die funktionelle Gruppen enthalten, die mit einem Metallsalz vernetzbar sind;
- Harnstoffharze, die funktionelle Gruppen enthalten, die mit einem Metallsalz vernetzbar sind; und
- Melaminharze, die funktionelle Gruppen enthalten, die mit einem Metallsalz vernetzbar sind.

**6.** Schaumstoff nach einem der Ansprüche 1 bis 5,
**dadurch gekennzeichnet, dass**
die mit dem Metallsalz vernetzbare, funktionelle Gruppe wenigstens eine Gruppe ist, die ausgewählt ist aus Carboxylgruppen, Sulfonsäuregruppen und Phosphatgruppen.

**7.** Schaumstoff nach einem der Ansprüche 1 bis 6,
**dadurch gekennzeichnet, dass**
die anorganische Substanz (II) wenigstens eine Verbindung ist, die aus Metalloxiden und Metallhydroxiden ausgewählt ist.

**8.** Schaumstoff nach Anspruch 7,
**dadurch gekennzeichnet, dass**
das Metallhydroxid wenigstens eine Verbindung ist, die aus Aluminiumhydroxid und Magnesiumhydroxid ausgewählt ist.

**9.** Schaumstoff nach einem der Ansprüche 1 bis 8,
**dadurch gekennzeichnet, dass**
der Schaumstoff solche flammhemmenden Eigenschaften aufweist, dass er die Anforderungen an die Brennklassen "1" oder "2" nach der Japanischen Norm JIS A-1321 erfüllt.

**10.** Wärmeisolierstoff, Baumaterial, insbesondere tragendes Baumaterial, Schutzmaterial oder Ummantelung, schalldämmendes Material oder Schallschutzmaterial,
**enthaltend**
einen Schaumstoff nach einem der Ansprüche 1 bis 9.

**11.** Verfahren zur Herstellung von metallsalz-vernetztem Schaumstoff nach einem der Ansprüche 1 bis 10,
**dadurch gekennzeichnet, dass**
ein organisches Polymer, das funktionelle Gruppe(n) enthält, die mit einem Metallsalz vernetzbar sind, in Anwesenheit einer anorganischen Substanz (II), einer Vernetzung mit einem Metall oder einer Metallverbindung, und einer Expansion bzw. Verschäumung unterworfen wird.

**12.** Verfahren zur Herstellung von metallsalz-vernetztem Schaumstoff nach einem der Ansprüche 1 bis 10,
**dadurch gekennzeichnet, dass**
ein Monomer, das funktionelle Gruppe(n) enthält die mit einem Metallsalz vernetzbar sind, in Anwesenheit einer anorganischen Substanz (II) gleichzeitig unterworfen wird

- einer Polymerisationsreaktion,
- einer Vernetzung mit einem Metall oder einer Metallverbindung, und
- einer Expansion bzw. Verschäumung.

**13.** Verfahren nach Anspruch 11 oder 12,
**dadurch gekennzeichnet, dass**
zusätzlich ein Blähmittel oder Treibmittel eingesetzt wird.

**14.** Verfahren zur Herstellung von metallsalz-vernetztem Schaumstoff nach einem der Ansprüche 1 bis 10,
**dadurch gekennzeichnet, dass**
ein metallsalz-vernetztes Monomer in Anwesenheit einer anorganischen Substanz (II) und eines Bläh- oder Treibmittels gleichzeitig einer Polymerisationsreaktion und einer Expansion bzw. Verschäumung unterworfen wird.

**15.** Verfahren zur Herstellung von metallsalz-vernetztem Schaumstoff
**dadurch gekennzeichnet, dass**
ein metallsalz-vernetztes Monomer in Anwesenheit einer anorganischen Substanz (II) und eines Bläh- oder Treibmittels gleichzeitig einer Polymerisationsreaktion und einer Expansion bzw. Verschäumung unterworfen wird.

## Revendications

**1.** Une mousse comprenant
une matrice expansée (I) d'un polymère organique, et
au moins une sorte de substance anorganique (II) choisie parmi des métaux, des composés métalliques et des matières de remplissage non-métalliques anorganiques,
dans laquelle cette matrice expansée (I) comporte des réticulations au sel métallique ; et
dans laquelle le polymère organique est au moins un polymère choisi d'un groupe comprenant :

- des polymères de polymérisation radicalaire qui comprennent des groupes fonctionnels réticulables à un sel métallique ;
- des polymères de polyaddition qui comprennent des groupes fonctionnels réticulables à un sel métallique ; et
- des polymères d'addition/condensation qui comprennent des groupes fonctionnels réticulables à un sel métallique ;

le polymère de polymérisation radicalaire comportant des groupes fonctionnels réticulables à un sel métallique comprenant :

- un monomère insaturé étant le monomère constituant qui comprend un groupe fonctionnel réticulable à un sel métallique ; et
- au choix, d'autres monomères insaturés (a4) ; et
- ce monomère insaturé comprenant le(s) groupe(s) fonctionnel(s) réticulable(s) à un sel métallique est choisi d'un groupe comprenant :
    - -- des monomères insaturés comprenant un (des) groupe(s) acide sulfonique (a2) ; et
    - -- des monomères insaturés comprenant un (des) groupe(s) phosphate (a3) ; et

dans laquelle le rapport
entre
le pourcentage en poids (M) du métal constituant les réticulants au sel métallique dans la matrice expansée (I), par rapport au poids total de la matrice expansée (I) et la substance anorganique (II)
et
le pourcentage en poids (S) de la substance anorganique (II) par rapport au poids total de la matrice expansée (I) et la substance organique (II)
répond à la condition suivante :

$$M \geq 10 - S/4$$

dans laquelle $M \leq 50$ et $S \geq 5$.

**2.** La mousse conformément à la revendication 1,
**caractérisée en ce que :**

la matrice expansée (I) est une matrice qui a été expansée à l'aide d'au moins un composé choisi parmi les carbonates métalliques et les carbonates d'hydrogène métalliques.

**3.** La mousse conformément à la revendication 1 ou 2,
**caractérisée en ce que :**

le métal formant les réticulations au sel métallique dans la mousse expansée (I) est au moins un métal polyvalent choisi du groupe comportant le calcium, le magnésium, le zinc, le baryum, l'aluminium et le fer.

**4.** La mousse conformément à une des revendications 1 à 3,
**caractérisée en ce que :**

la proportion d'expansion de la mousse est de 5 à 50.

**5.** La mousse conformément à une des revendications 1 à 4,
**caractérisée en ce que :**

le polymère organique est au moins un polymère organique choisi du groupe comprenant :

- des polystyrènes comprenant des groupes fonctionnels réticulables au sel métallique ;
- polyuréthanes comprenant des groupes fonctionnels réticulables au sel métallique ;
- des résines époxy comprenant des groupes fonctionnels réticulables au sel métallique ;
- des résines phénoliques comprenant des groupes fonctionnels réticulables au sel métallique ;

- des résines d'urée comprenant des groupes fonctionnels réticulables au sel métallique ; et
- des résines de mélamine comprenant des groupes fonctionnels réticulables au sel métallique.

**6.** La mousse conformément à une des revendications 1 à 5,
**caractérisée en ce que :**

le groupe fonctionnel réticulable au sel métallique est au moins un groupe choisi parmi le groupe carboxyle, le groupe acide sulfonique et le groupe phosphate.

**7.** La mousse conformément à une des revendications 1 à 6,
**caractérisée en ce que :**

la substance anorganique (II) est au moins un composé choisi parmi les oxydes métalliques et les hydroxydes métalliques.

**8.** La mousse conformément à la revendication 7,
**caractérisée en ce que :**

l'hydroxyde métallique est un moins un composé choisi parmi l'hydroxde d'aluminium et l'hydroxyde de magnésium..

**9.** La mousse conformément à une des revendications 1 à 8,
**caractérisée en ce que :**

cette mousse présente des propriétés ignifuges répondant aux exigences des classes 1 ou 2 de la norme japonaise JIS A-1321.

**10.** Un isolant thermique, un matériau de construction notamment de construction porteuse, un matériau de protection ou de recouvrement, un matériau d'insonorisation ou antibruit,
**caractérisé en ce qu' :**

il comprend une mousse conformément à une des revendication 1 à 9.

**11.** Un procédé de production d'une mousse réticulée au sel métallique conformément à une des revendications 1 à 10,
**caractérisé en ce qu' :**

un polymère organique comprenant un groupe fonctionnel réticulable au sel métallique subit

- une réticulation avec un métal ou un composé métallique et
- en présence d'une substance anorganique (II), une expansion.

**12.** Un procédé de production d'une mousse réticulée au sel métallique conformément à une des revendications 1 à 10,
**caractérisé en ce qu' :**

un monomère comprenant un groupe fonctionnel réticulable au sel métallique subit en présence d'une substance anorganique (II) simultanément

- une polymérisation,
- une réticulation avec un métal ou un composé métallique, et
- une expansion.

**13.** Le procédé conformément à la revendication 11 ou 12,
**caractérisé en ce qu' :**

il utilise en outre un agent gonflant ou soufflant.

**14.** Un procédé de production d'une mousse réticulée au sel métallique conformément à une des revendications 1 à 10,
**caractérisé en ce qu' :**

un monomère réticulé au sel métallique subit simultanément une polymérisation et une expansion en présence d'une substance anorganique (II) et d'un agent gonflant ou soufflant.

**15.** Un procédé de production d'une mousse réticulée avec du sel métallique
**caractérisé en ce qu' :**

un monomère réticulé au sel métallique subit simultanément une polymérisation et une expansion en présence d'une substance anorganique (II) et d'un agent gonflant ou soufflant.